Europäisches Patentamt

European Patent Office

Office européen des brevets

(19)

(11) Veröffentlichungsnummer : **0 235 667 B1**

(12) **EUROPÄISCHE PATENTSCHRIFT**

(45) Veröffentlichungstag der Patentschrift :
24.07.91 Patentblatt 91/30

(51) Int. Cl.⁵ : **B29C 45/66, B29C 45/14**

(21) Anmeldenummer : **87102247.1**

(22) Anmeldetag : **17.02.87**

(54) **Verschliessvorrichtung für eine Spritzeinrichtung.**

(30) Priorität : **27.02.86 DE 3606280**

(43) Veröffentlichungstag der Anmeldung :
**09.09.87 Patentblatt 87/37**

(45) Bekanntmachung des Hinweises auf die
Patenterteilung :
**24.07.91 Patentblatt 91/30**

(84) Benannte Vertragsstaaten :
**AT BE CH DE ES FR GB IT LI NL SE**

(56) Entgegenhaltungen :
**EP-A- 0 088 217**
**EP-A- 0 167 095**
**DE-A- 2 520 880**
**DE-A- 2 640 311**
**FR-A- 2 394 383**
**GB-A- 2 062 534**
**US-A- 3 954 373**

(73) Patentinhaber : **Tetra Pak Holdings & Finance S.A.**
**70, Avenue C.-F. Ramuz**
**CH-1009 Pully (CH)**

(72) Erfinder : **Reil, Wilhelm**
**Altengassweg 16**
**W-6142 Bensheim 1 (DE)**
Erfinder : **Deutschbein, Ulrich**
**Am Hansenberg 3**
**W-6109 Mühltal 3 (DE)**

(74) Vertreter : **Weber, Dieter, Dr. et al**
**Dr. Dieter Weber und Dipl.-Phys. Klaus Seiffert**
**Patentanwälte Gustav-Freytag-Strasse 25**
**Postfach 6145**
**W-6200 Wiesbaden 1 (DE)**

EP 0 235 667 B1

## Beschreibung

Die Erfindung betrifft eine Vorrichtung für den Antrieb von Spritzformteilen einer Kunststoffspritzeinrichtung zum Anspritzer eines Wandteils an eine Papierbahn, mit mindestens einer an einem Träger befestigten Versorgungsspritze, mehreren, mit dieser jeweils fest verbundenen Spritzköpfen und mit angetriebenen Verbindungshebeln ; und die Erfindung betrifft auch die Verwendung dieser Vorrichtung für die Herstellung von Flüssigkeitspackungen.

Es sind die verschiedensten Spritzeinrichtungen zum Anspritzen oder Einspritzen von Wandteilen an eine Papierbahn bekannt, wobei das zu bearbeitende Produkt in einer Linie durch gegeneinander bewegliche Spritzformteile geführt und intermittierend nacheinander bearbeitet wird. Beispielsweise ist bereits ein Verfahren zur Herstellung einer Flüssig keitspackung bekannt, deren tubusförmige Seitenwände aus mit Kunststoff beschichtetem Trägermaterial, z.B. Papier oder Pappe, Bestehen, deren Boden viereckig und durch Falten und Versiegeln hergestellt ist und deren eine Öffnungsvorrichtung aufweisender, nur aus Kunststoff bestehender Deckel an die Oberkante des die Seitenwände bildenden Tubus angespritzt ist. Bei diesem Verfahren werden die Schlauchstücke aus beschichtetem Papier in einer Linie durch die Spritzeinrichtung geführt, wobei die zylindermantelförmig geformten Seitenwände bzw. der Papiertubus auf einem Dorn, vorzugsweise einem von mehreren auf einem Dornrad angeordneten Dorn gehaltert und geführt sind/ist. Die Dorne am Dornrad stellen bei solchen Herstellungsmaschinen das Formunterteil dar, während das Formoberteil seinerseits teilbar ist, wobei seine beiden Teile, die Oberformteile, relativ zueinander beweglich sind. Diese Teilung der Oberform ist besonders zweckmäßig bei der Erstellung geeigneter Öffnungsvorrichtungen in der Endwand, d.h. im Deckel, einer Flüssigkeitspackung.

Verständlicherweise wird für die Öffnungs- und Schließbewegung der Oberform ein Mindestraum erforderlich weil ein nicht unerheblicher Bauraum für die kräftig ausgebildeten Steuer- und Anlenkungsteile des Spritzformantriebes notwendig ist. Insbesondere bei dem Hindurchführen der Unterformen in Gestalt von Dornen, die auf einem Dornrad sitzen, kann die Öffnungs- und Schließrichtung der Oberformteile nur zur Seite, d.h. senkrecht zur Bewegungsrichtung der Dorne oder Unterformteile erfolgen. Zwar kann man die Oberform auch in Richtung der Dornachse nach außen bzw. oben anheben und öffnen, die hierzu erforderlichen Konstruktionen der Maschine sind aber derart umständlich, aufwendig und volumimös, so daß sich seitliche Bewegungs- und Steuereinrichtungen als zweckmäßiger ergeben haben.

Bei der Herstellung von Flüssigkeitspackungen besteht aber häufig das Problem der hohen Leistung einer Packungsmaschine (Stückzahl pro Zeiteinheit).

Zum Anspritzen eines Deckels an einen Papiertubus ist eine Mindestzeit zum Einrichten, Schließen, Spritzen, Öffnen und Aushärten erforderlich, die nicht unterschritten werden kann. Will man die Leistung einer solchen Packungsherstellungsmaschine steigern, dann bietet sich die Verdopplung der gesamten Packungsherstellungseinheiten an, d.h. die Anordnung verschiedener Produktionslinien nebeneinander. Der Abstand dieser Produktionslinien und damit der Spritzeinrichtungen nebeneinander ist aber aus den besagten Raumgründen für die Öffnungs- und Schließeinrichtungen der Oberform sehr groß. Eine solche Maschine würde sperrig und wäre schlecht aufzustellen und zu betreiben.

Es hat sich außerdem gezeigt, daß die Verwendung einer einzigen Plastifiziereinheit mit Versorgungsspritze, Leitungen und Spritzkopf hohe Investitionen erfordert. Der Pachmann hat daher versucht, mehrere Spritzköpfe, die bei der Betätigung der Packungsmaschine direkt an den Formraum zwischen Ober- und Unterformteil herangeführt werden müssen, zusammenzufassen und an eine Versorgungsspritze anzuschließen. Durch die großen Abstände zwischen nebeneinander angeordneten Spritzeinrichtungen haben sich aber derart lange Versorgungsleitungen ergeben, daß der extrudierte Kunststoff früh zeitig erstarrt und die Spritzköpfe fehlerhaft arbeiten.

Aufgabe der Erfindung ist daher die Verbesserung der vorstehend bezeichneten Vorrichtung dahingehend, damit parallele Bahnen des Werkstückes (z.B. Papierbahn, Papiertubus oder dergleichen) dichter nebeneinander geführt und enger beieinander gehalten werden können, um möglichst mit nur einer einzigen Plastifiziereinheit auf engstem Raum bei kurzen Fließwegen für den extrudierten Kunststoff auszukommen.

Diese Aufgabe wird erfindungsgemäß dadurch gelöst, daß die Förderrichtung der Papierbahn etwa senkrecht zur Öffnungsund Schließrichtung der Formteile liegt, mindestens zwei Paare von relativ zueinander bewegbaren Formteilen im Abstand in Öffnungs- und Schließrichtung nebeneinander angeordnet sind und die Verbindungshebel in Form von Laschen und Kniehebeln derart angelenkt sind, daß jedes Formteilpaar mittels mindestens zweier Lagerzapfen in einer parallel zur Öffnungs- und Schließrichtung der Formteile verlaufenden Schiene geführt ist, jeder zwischen Formteilpaaren angeordnete Lagerzapfen einerseits über zwei paarweise angeordnete Kniehebel drehbar am nächsten Formteil und andererseits an einer einseitig stationär gehalterten Lasche angelenkt ist, die beiden Kniehebel an einer beweglichen Drehstelle miteinander und mit dem bewegbaren Träger verbunden sind und daß der jeweils das äußerste Formteil führende Lagerzapfen einerseits an einer einseitig stationär gehalterten Lasche und andererseits über einen Kniehebel drehbar mit dem bewegbaren Träger verbunden ist. Mit der neuen Antriebsvorrichtung können trotz der Anordnung mehrerer Formteilpaare in deren Öffnungs- und Schließrichtung nebeneinander wesentlich kürzere Fließwege für den Kunststoff von einer Versorgungsspritze zu den verschiedenen Spritzköpfen erreicht werden. Durch die geschickte Anordnung und Ausgestaltung der Verbindungshebel und der Führung der Antriebskräfte durch diese Laschen und Hebel kann der Abstand zwischen benachbarten Formteilpaaren erheblich verringert werden. Durch die Anordnung eines beweglichen Trägers, in welchen die Antriebskräfte eingeleitet werden, ist ein günstiger Antrieb und eine kräftige Abstützung der Lagerzapfen und damit der einzelnen Formteile gewährleistet, um die hohen erforderlichen Kräfte zufriedenstellend aufzunehmen. Der Träger braucht lediglich an seinen Enden für die an den äußeren Enden angeordneten Formteile stärker ausgebildet zu sein, während er in der Mitte mit kleineren Bauteilen auskommt. Im Mittelbereich, d.h. zwischen den Paaren von Formteilen ist dafür gesorgt, daß diese sich im wesentlichen gegeneinander abstützen, ohne die beim Spritzen auftretenden Drücke

im Mittelbereich jeweils in den bewegbaren Träger einleiten zu müssen. Dadurch kann der Gesamtaufbau der Verbindungshebel kleiner gestaltet werden, so daß der Abstand benachbarter Formteilpaare und damit die Fließwege für den extrudierten Kunststoff verkleinert werden können.

Vorteilhaft ist es dabei erfindungsgemäß, wenn die Kniehebel jedes Kniehebelpaares benachbarter Formteilpaare im geschlossenen Zustand der Formteile in einem Winkel von 0° bis 15°, vorzugsweise von 0° bis 5°, zueinander stehen, d.h. etwa in einer Linie hintereinander. Bei dieser Winkellage der zu einem Paar gehörenden Kniehebel erkennt man die günstige Kraftführung zweier benachbarter Formteile aus zwei benachbarten Formteilpaaren, nämlich gegeneinander derart, daß sich beim Spritzen die entstehenden Drücke gegenseitig abstützen.

Bei weiterer Ausgestaltung der Erfindung ist die Schiene senkrecht zu ihrer Längsachse von den in ihr geführten Lagerzapfen bewegbar. Zur Parallelhaltung der einzelnen Formteile sollten diese zusätzlich zu den erwähnten Lagerzapfen noch mit weiteren Führungszapfen versehen sein, die ebenfalls in der genannten Schiene geführt sind. Die Schiene selbst dient daher lediglich Führungszwecken und braucht keine hohen Kräfte aufzunehmen. Das wiederum ermöglicht eine freie Beweglichkeit der Schiene selbst und damit der Lagerzapfen, die ihrerseits (die Beweglichkeit) eine verhältnismäßig einfache Anlenkung der die Schließ- und Öffnungsbewegung steuernden Hebel erlaubt, wobei gleichzeitig die Antriebskräfte in besonders einfacher Weise eingeleitet werden können.

Vorteilhaft ist es gemäß der Erfindung ferner, wenn der Träger die Gestalt eines Kammes mit Endarmen und mittleren Armen hat, an deren jeweils freiem Ende sich die bewegliche Drehstelle befindet. Es wurde oben bereits die verhältnismäßig leichte Form des Trägers in seinem Mittelbereich erläutert. Durch die Anbringung mittlerer Arme kleinerer Abmessungen kann der gesamte Träger verhältnismäßig klein und leicht ausgestaltet werden, lediglich die Endarme müssen am Anfang und Ende einer Kette von Formteilpaaren das jeweils äußerste Formteil bewegen und die von ihm ausgeübten Druckkräfte aufnehmen. Dieser sich bewegende Träger haltert in zweckmäßiger Weise die Versorgungsspritze und auch die einzelnen Spritzköpfe ; und er erlaubt die Anordnung der Heißkanäle, d.h. der Leitungen für den extrudierten Kunststoff von der Versorgungsspritze zu den einzelnen Spritzköpfen.

Bei der Ausgestaltung einer Antriebsvorrichtung der vorstehend beschriebenen Art kann man beispielsweise in eine beidseitig mit Kunststoff beschichtete Papierbahn mit hoher Leistung (Arbeitsvorgang pro Zeiteinheit) Kunststoffteile einspritzen. Die Spritzstellen können nämlich durch den engen Bauraum für die Verbindungshebel verhältnismäßig dicht nebeneinander in einer Kette angeordnet werden, so daß z.B. vier oder acht Spritzvorgänge gleichzeitig an einer zickzackförmig durch die Kette der Spritzeinrichtungen geführten Bahn vorgenommen werden. Ist in dieser Bahn beispielsweise eine Kette von eingestanzten Löchern vorgesehen, dann können in diese Löcher Abdeckfolien, Öffnungseinrichtungen oder dergleichen eingespritzt werden. Da der Spritzvorgang dieser oder auch Folien der Endwand an einen Papiertubus eine gewisse Mindestzeit benötigt, kann man die Leistung dadurch steigern, daß eine Mehrzahl von Spritzvorgängen gleichzeitig an der Papierbahn durchgeführt wird.

Besonders zweckmäßig ist eine Ausführungsform der Erfindung gekennzeichnet, wenn jedes Paar von Formteilen ein Formoberteil bildet und relativ zu diesem bewegbare Formunterteile durch intermittierend drehbar angetriebene, auf einem Rad befestigte Dorne gebildet sind, wobei die Achse des Dornrades etwa in Öffnungs- und Schließrichtung des Formoberteils angeordnet ist, und wenn mindestens zwei Dornräder mit gemeinsamer Drehachse in dem genannten Abstand nebeneinander angeordnet sind. Auf diese Weise kann man Endwände an einen Papiertubus einer Flüssigkeitspackung mit hoher Leistung anspritzen, denn man hat einen besonderen Antrieb für die Spritzformoberteile, der eine enge Anordnung bzw. einen kleinen Abstand der einzelnen Dornräder nebeneinander erlaubt.

Mit den erfindungsgemäßen Maßnahmen ist daher die Verwendung der vorstehend beschriebenen Vorrichtung besonders vorteilhaft zur Herstellung von Flüssigkeitspackungen unter Anspritzen einer Endwand aus Kunststoff an den Papiertubus der Pakkung, wobei deren Seitenwände durch diesen Tubus gebildet sind und aus beidseitig mit Kunststoff beschichtetem Papier bestehen. Packungen für Flüssigkeiten, insbesondere Milch und Fruchtsäfte, stellen ein Massenprodukt dar, für welches Herstellungsmaschinen mit hoher Leistung gefordert werden. Molkereien oder Fruchtsafthersteller haben aber nicht beliebig Stellraum für die Packungsmaschinen und erwarten daher hohe Leistung auf geringer Stellfläche. Der Ausstoß der neuen Packungsmaschine ist bei Verwendung der erfindungsgemäßen Antriebsvorrichtung unerwartet groß bei einwandfreier Einspritzung der einzelnen Teile.

Vorteilhaft ist aber auch die Verwendung der genannten Vorrichtung zur Herstellung von Flüssigkeitspackungen anderer Art, nämlich unter Einspritzen einer Öffnungsvorrichtung aus kunststoff in eine Seiten- oder Endwand der Packung, die aus beidseitig mit Kunststoff beschichtetem Papier besteht, wobei die Seiten- und/oder Endwände über Faltkanten und/oder Schweißnähte miteinander verbunden sind. Damit läßt sich in praktischer Weise eine klassische Flüssigkeitspakkung, die z.B. vollständig aus Papier bzw. Karton besteht, mit einer Öffnungsvorrichtung versehen, weil in ein vorgestanztes Loch eine Abdeckfolie schnell und zuverlässig eingespritzt werden kann.

Weitere Vorteile, Merkmale und Anwendungsmöglichkeiten der vorliegenden Erfindung ergeben sich aus der folgenden Beschreibung bevorzugter Ausführungsformen in Verbindung mit den Zeichnungen. Es zeigen :

Figur 1 die Seitenansicht einer Hochleistungs-Packungsmaschine für Flüssigkeiten,

Figur 2 eine schematisierte Schnittansicht entlang der Linie II-II der Figur 1,

Figur 3 abgebrochen und schematisch eine Teilansicht gemäß Figur 2, wobei im wesentlichen nur die Oberformteile gezeigt sind,

Figur 4 eine perspektivische und noch weiter schematisierte Veranschaulichung des beweglichen Trägers, der Führungsschienen und Verbindungshebel,

Figur 5 eine Schnittansicht durch die Figur 3 gemäß der Linie V-V,

Figur 6 die Draufsicht auf eine schematisch angeordnete andere Ausführungsvorrichtung zum Einspritzen einer Öffnungsvorrichtung in das vorgestanzte Loch einer Papierbahn,

Figur 7 die Ausgestaltung des Formraumes im Bereich des ausgestanzten Loches der Papierbahn in einer Schnittdarstellung mitten durch die zu erstellende Öffnungsvorrichtung mit schematisch angedeuteten Formteilen,

Figur 8 die Ansicht einer Packung, die mit der Vorrichtung nach den Figuren 1 bis 5 herstellbar ist,

Figur 9 eine Packung, die eine Öffnungsvorrichtung trägt, welche mit der Maschine nach Figur 6 erstellbar ist, und

Figur 10 eine abgebrochene schematische Schnittdarstellung entlang der Linie X-X in Figur 9.

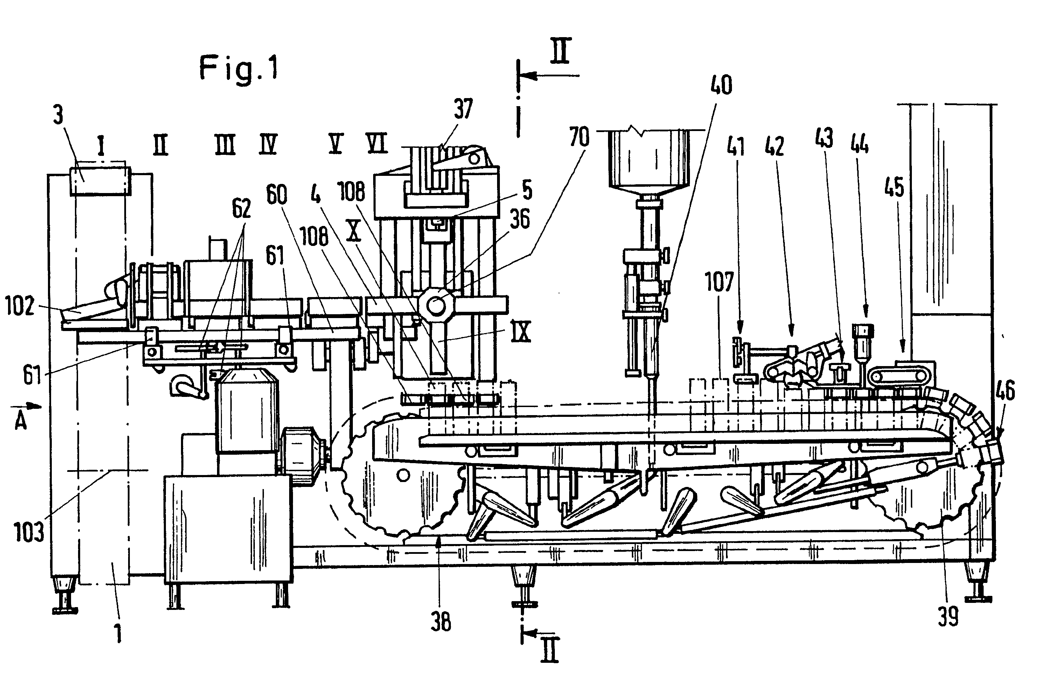

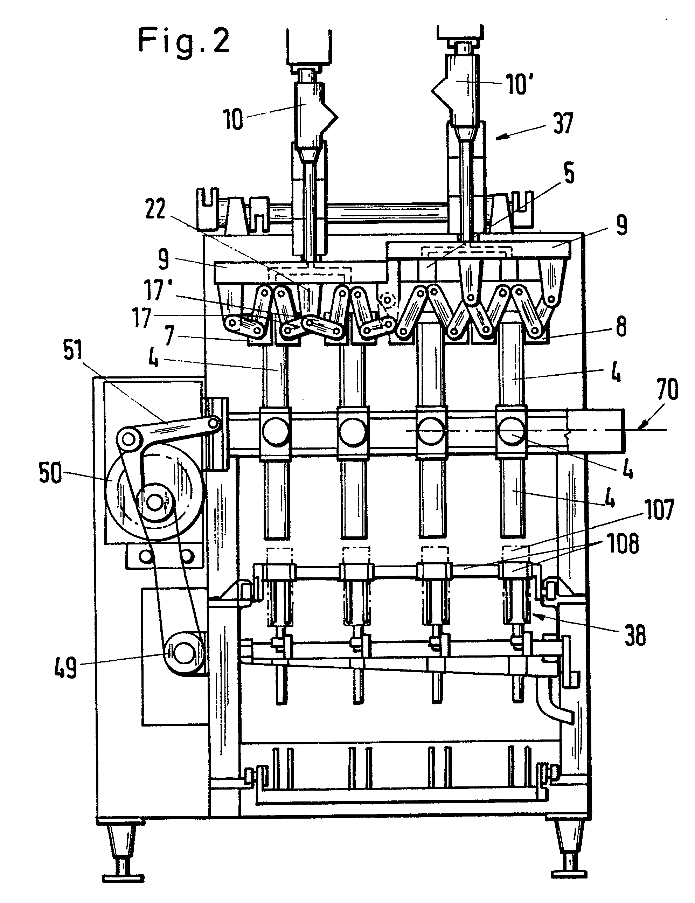

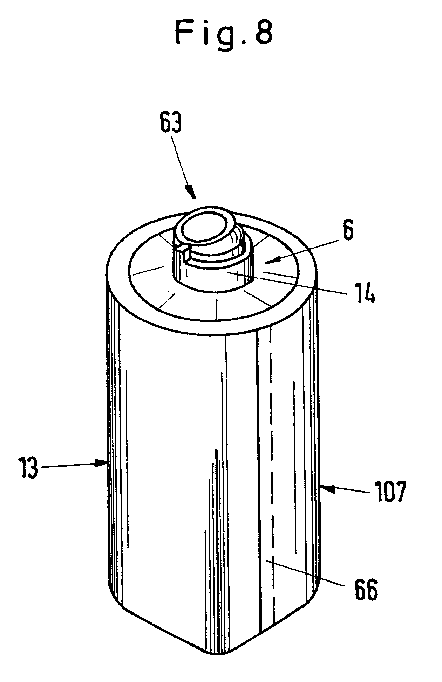

In den Figuren 1 bis 5 ist eine Vorrichtung für die Herstellung von Flüssigkeitspackungen gezeigt, bei denen an den tubusförmigen Seitenwänden an einem Ende eine nur aus Kunststoff bestehende Endwand angespritzt wird. Die Herstellung erfolgt in groben Zügen, wie man am besten aus Figur 1 erkennt. Von der Rolle 1 läuft die Papierbahn 2 in Richtung des Pfeiles A über eine erste Umlenkrolle 3 in der Position I über weitere, nicht näher dargestellte Umlenk- und Abzugsrollen, die zuletzt intermittierend so angetrieben sind, daß die Bahn nach Aufbrigen der notwendigen Präge- und Schnittlinien in die Schneideinrichtung 102 geführt wird. Hier wird die Bahn in vier Abschnitte separiert, die dann mittels der Transporteinrichtungen 60, 61, 62 von der Position II bis zu Position V gefördert werden. Auf diesem Wege erfolgt das Hochfalten des zunächst flachen Zuschnittes zu einem Tubus, der längs eines Dornes geschoben wird. In der Position VI hat die Packung den ersten Dorn 4 eines allgemein mit 36 bezeichneten Dornrades erreicht, welches sich in der Darstellung der Figur 1 in Uhrzeigerrichtung dreht. Die Spritzeinrichtung ist allgemein mit 37 bezeichnet und oberhalb des Dornrades 36 angeordnet. Man erkennt auch den Spritzkopf 5. Nach Anspritzen der Endwand 6 der in Figur 8 gezeigten Pakkung wird der Tubus aus der Vertikalen oben nach unten in die Horizontale und um weitere 90° nach unten in die Position IX gedreht, von welcher der Tubus nach unten in die Position X abgezogen wird. Jetzt befindet sich der jeweilige Papiertubus 107 in den Aufnahmeteilen 108, die nebeneinander angeordnet sind, wie auch in Figur 2 zu erkennen ist. Diese Aufnahmeteile 108 gehören zu der in Figur 1 allgemein mit 38 bezeichneten Fördereinrichtung, die aus einer endlosen Kette von Reihen von Aufnahmeteilen 108 besteht, welche um Umlenkräder 39 geführt ist. Wenn die jeweilige Packungsreihe nach Verlassen der Position X die Füllstation 40 erreicht, wird die hier unten geschlossene und oben offene Packung gefüllt, an der Station 41 wird die Höhe der Pakkung, d.h. die Oberkante des Papiertubus, auf eine genau definierte Höhe gebracht, bevor in der Station 42 das Verschließen erfolgt. In der Station 43 wird der Boden der Pakkung unter Bildung von Dreiecklappen gefaltet, die nach oben stehen. Bei 44 sieht man eine Heißluftblasvorrichtung zum Erwärmen der äußeren Oberflächen und Umlegen der Dreiecklappen auf den Boden der Packung. Dieses Umlegen erfolgt beim Weitertransport von der Stelle 44 in die Station 45 durch geeignete Gleitstäbe. Mit 45 ist eine mitlaufende Andruckstation angedeutet, die über mindestens zwei Packungsreihen hinwegreicht. Diese Station 45 drückt über je zwei Takte die Dreiecklappen an, d.h. zwei hintereinander liegende Pakkungen, damit die Andruckzeit verlängert wird. In der fast horizontalen Richtung in der Position 46 (in Figur 1 rechts) wird die Packung nun auf eine nicht dargestellte Transportkette ausgestoßen.

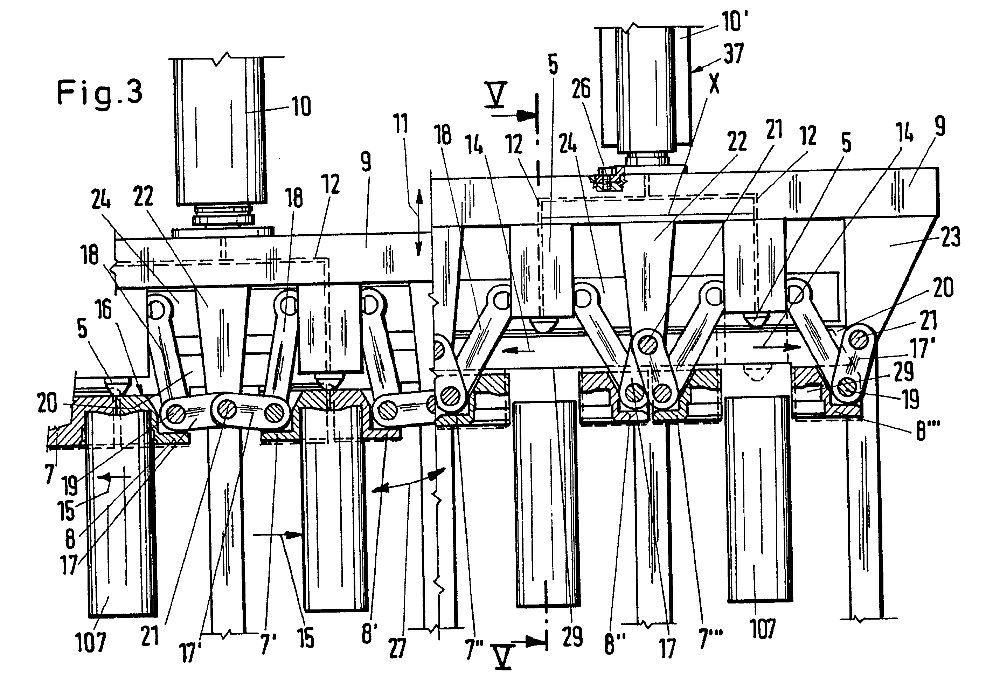

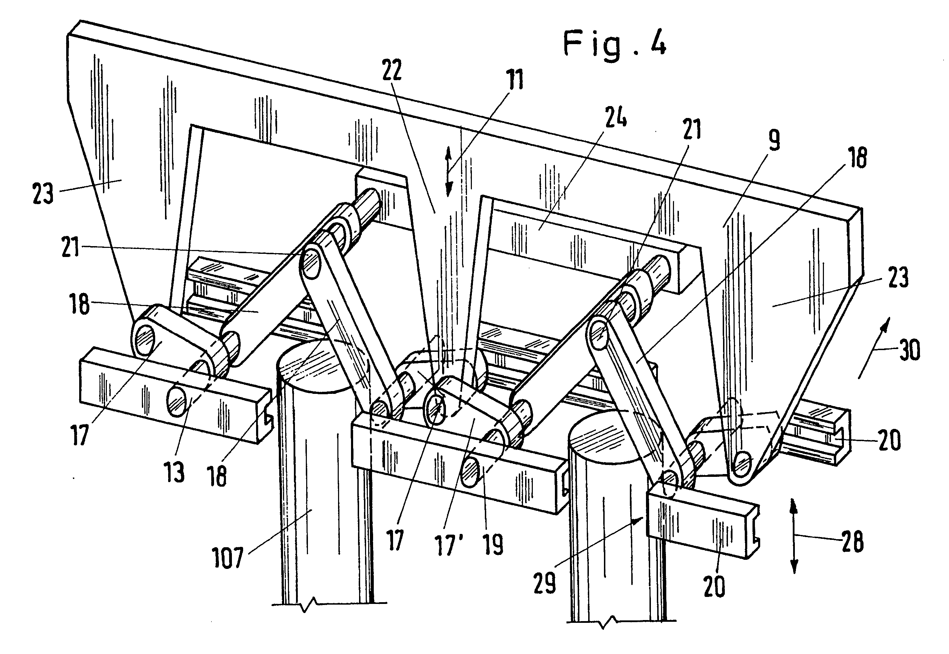

In Figur 2 ist die allgemein mit 37 bezeichnete Kunststoffspritzeinrichtung mit den darunter angeordneten Dornrädern über der Fördereinrichtung 38 deutlicher und vergrößerter herausgezeichnet. Zum Öffnen und Schließen der einzelnen Formteile 7, 8 sind in Figur 2 links an der Maschine der Motor 49 und die Nockenscheibe 50 vorgesehen. Die Kraft für den Antrieb wird über den Hebel 51 in den beweglichen Träger 9 eingeleitet. An diesem ist oben eine Versorgungsspritze 10, 10′ und sind unten die Spritzköpfe 5 angebracht und bewegen sich gemeinsam in Richtung des Doppelpfeiles 11 (Figuren 3 und 4). Durch diese Auf- und Abbewegung des Trägers 9 schließen und öffnen die Oberformhälften 7 und 8, die soweit auf das benachbarte Formteilpaar zu und pro Paar auseinanderfahren können, daß zwischen jedem Paar der jeweilige Dorn 4 ohne Behinderung hindurchlaufen kann. Man erkennt die verhältnismäßig kurzen Heißkanäle 12 (Figur 3) für den extrudierten Kunststoff zwischen Versorgungsspritze 10 und den Spritzköpfen 5.

Die in Figur 2 dargestellte Spritzeinrichtung 37 mit den Oberformteilen 7 und 8 ist deutlicher anhand der Figuren 3 bis 5 dargestellt. Von dem nicht dargestellten Dornrad ist in diesen Figuren nur jeweils der Papiertubus 107, welcher die Seitenwände der einen Ausführungsform der Packung 13 bildet, gezeigt. In Figur 3 sind zwei Arbeitszustände gezeigt, in der linken Hälfte der Spritzzustand mit geschlossenen Formteilen 7, 7′ und 8, 8′; in der rechten Hälfte der andere Zustand, in welchem die Dorne mit den Papiertuben. 107 durch die geöffneten Oberformteile 7″, 7‴ bzw. 8″, 8‴ hindurchfahren können. Damit erkennt man sogleich schon die Öffnungsrichtung 14 und Schließrichtung 15 der Formteile 7 und 8. (Die Anlenkung und Bewegung der Form wird hauptsächlich anhand Figur 3 an einer Station beschrieben, wobei es sich versteht, daß die mit einem oder mehreren Abostrophen versehenen anderen Stationen in gleicher Weise arbeiten.) Der Abstand X zweier voneinander getrennt angeordneter Spritzköpfe 5 bzw. Formteilpaare 16 wird durch die günstige Anordnung der im Folgenden näher beschriebenen Verbindungshebel ermöglicht.

Die Verbindungshebel weisen nämlich Laschen 18 und paarweise vorgesehene Kniehebel 17, 17′ auf. Jedes Formteilpaar 16 ist mittels zweier Lagerzapfen 19 und weiterer, nicht dargestellter Zapfen in einer parallel zur Öffnungs- und Schließrichtung 14, 15 der Formteile 7, 8 verlaufenden Schiene 20 geführt. Weiterhin ist jeder zwischen Formteilpaaren 16 angeordnete Lagerzapfen 19 einerseits über die paarweise angeordneten Kniehebel 17, 17′ drehbar am nächsten Formteil 7′, 8′ und andererseits an der einseitig stationär gehaltenen Lasche 18 angelenkt. Die beiden Kniehebel 17, 17′ sind an einer beweglichen Drehstelle 21 miteinander und mit dem bewegbaren Träger 9 verbunden. Die Formoberteile 7, 8 sind außerdem zum Öffnen derart weit seitlich von Dorn 4 auseinanderbewegbar, daß sich der Dorn 4 mit dem Papiertubus 107 frei hindurchdrehen kann. Man erkennt aus Figur 3 links und Figur 4 in der Mitte auch, daß die Kniehebel 17, 17′ eines Paares benachbarter Formteilpaare 16 im geschlossenen Zustand der Formteile 7, 8 in einem Winkel von etwa 3° zueinander stehen. Sie bilden praktisch eine Linie von Lagerzapfen 19 zu Lagerzapfen 19, wodurch sich die Druckkräfte beim Spritzvorgang gegenseitig abstützen und aufheben können.

Der bewegliche Träger 9 ist ebenfalls aus den Figuren 3 und 4 in seiner kammartigen Gestalt besonders deutlich erkennbar, nämlich mit den mittleren Armen 22 und den Endarmen 23.

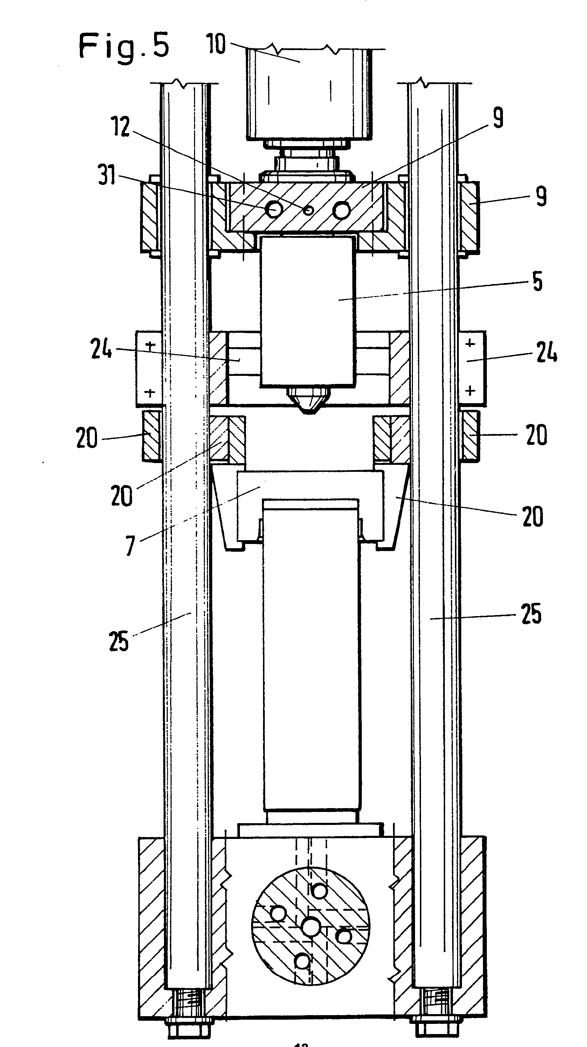

Es wurde vorstehend erläutert, daß die drehbar angelenkten Laschen 18 an einer Seite stationär gelagert sind. Diese stationäre Halterung erfolgt über die mit 24 bezeichnete stationäre Aufhängung, die in der in Figur 5 angedeuteten Weise über die Maschinensäulen 25 fest am Maschinenrahmen angebracht ist.

Die Befestigungsschraube 26 in Figur 3 oben zeigt eine mögliche Anbringungsart der Versorgungsspritze 10′ am Träger 9. Der in Figur 3 in der Mitte unten gezeigte leicht gebogene Doppelpfeil 27 veranschaulicht die tatsächliche Bewegung der Formhälften 7, 8, wodurch auch die paarweise im Abstand zueinander angeordneten Schienen 20, die im Querschnitt C-förmig sind, nach oben und unten bewegt werden, wie in Figur 4 durch den Doppelpfeil 28 angedeutet ist. Es versteht sich, daß die Schienen 20 vor und hinter jedem Dorn 4 einen Durchlaß 29 aufweisen, wie in den Figuren 3 und 4 gezeigt ist. Auf diese Weisen können die Papiertuben 107 stets frei unter der Schiene 20 für die Geradführung der Oberformhälften 7, 8 hindurchlaufen. In der perspektivischen Darstellung der Figur 4 zeigt der Pfeil 30 die Bewegungsrichtung der Papiertuben 107 an. Mit 31 ist in Figur 5 die Heizpatrone bezeichnet.

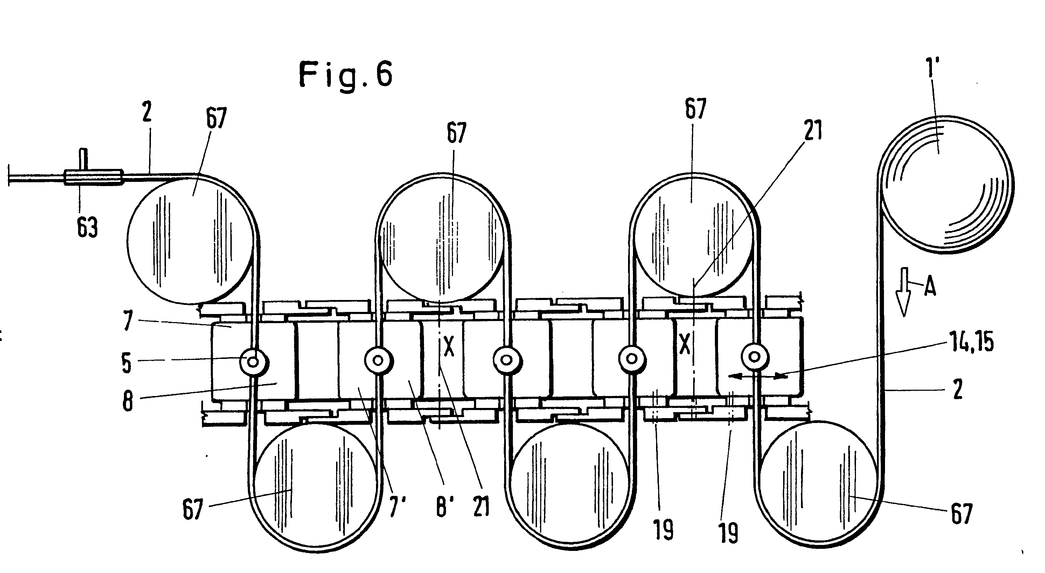

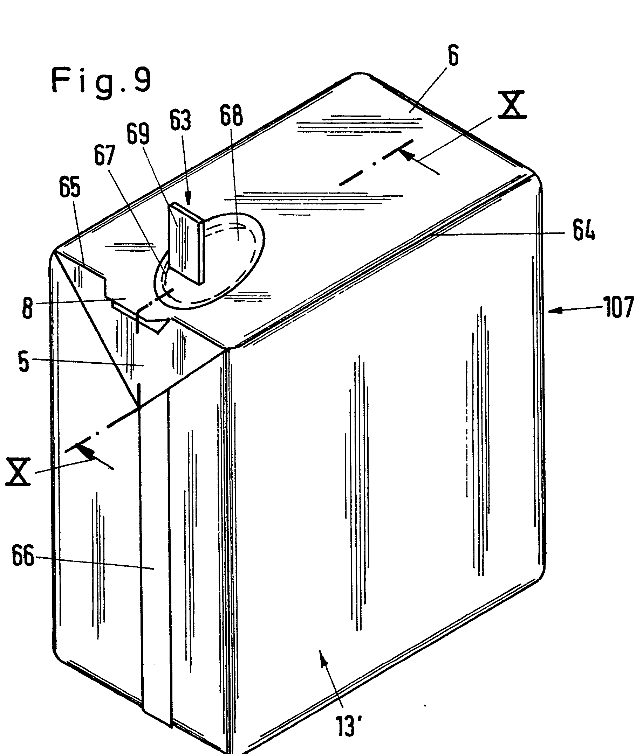

In vereinfachter Darstellung ist in Figur 6 eine andere Art Maschine zur Herstellung einer Flüssigkeitspackung 13′ gezeigt, bei welcher eine Öffnungsvorrichtung 63 aus Kunststoff in eine Endwand 6 der Packung 13′ eingespritzt wird. Diese in Figur 9 dargestellte Packung besteht ganz aus beidseitig mit Kunststoff beschichtetem Papier, wobei die Seitenwände 107 (die man auch als Papiertubus bezeichnen kann) und die Endwände, von denen nur die obere Endwand 6 gezeigt ist, über Faltkanten 64, 65 bzw. die Schweißnaht 66 verbunden sind.

In Figur 6 wird von einer Vorratsrolle 1′ die Papierbahn 2 in Richtung des Pfeiles A abgezogen und zick-zack-förmig über Umlenkwalzen 67, von denen hier sechs Stück gezeigt sind, mehrere Male, hier fünf mal, durch eine Kette von Spritzeinrichtungen 37 geführt wird. Es sei angenommen, daß in der Papierbahn 2 Löcher 67' vorgestanzt im Abstand in Laufrichtung A voneinander vorgesehen sind in solcher Weise, daß beim Anhalten der gesamten Bahn in der in Figur 6 gezeigten Station an den Stellen der Spritzköpfe 5 gerade jeweils ein Loch 67' zu liegen kommt. Angedeutet sind hier jeweils nur die paarweise zusammengefaßten Formhälften 7, 8 ; 7', 8' usw. ; mit den Lagerzapfen 19 und den Lagen der beweglichen Drehstellen 21. Die Öffnungsvorrichtung 63 gemäß Figur 9 ist am ablaufseitigen Ende der Bahn 2 in Figur 6 ebenfalls als fertig eingespritzt gezeigt. Man sieht aus Figur 6, daß die jeweilige Ebene der durch die Kette von Spritzeinrichtungen 37 geführten Papierbahn 2 immer senkrecht zur Öffnungs- und Schließbewegung 14, 15 der Formteile 7, 8 verläuft.

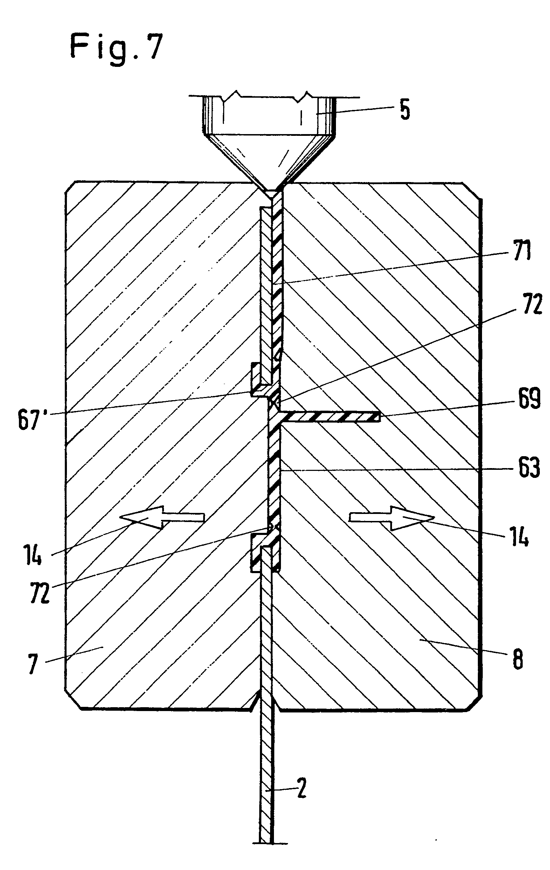

In Figur 7 ist schematisch vergrößert eine Schnitt durch zwei Formhälften 7, 8 gezeigt, mit den Pfeilen 14 für die Öffnungsbewegung. Dazwischen liegt die Papierbahn 2 mit dem ausgestanzten Loch 67', in welches die Öffnungsvorrichtung 63 unter Ausfüllung des gesamten Formhohlraumes angebracht wird. Man erkennt, wie die Öffnungsvorrichtung 63 mit dem Abdeckteil 68 (Figur 9) den freien Schnittrand des Loches 67' beidseitig übergreift. Die Lasche 69 soll das Aufreißen erleichtern.

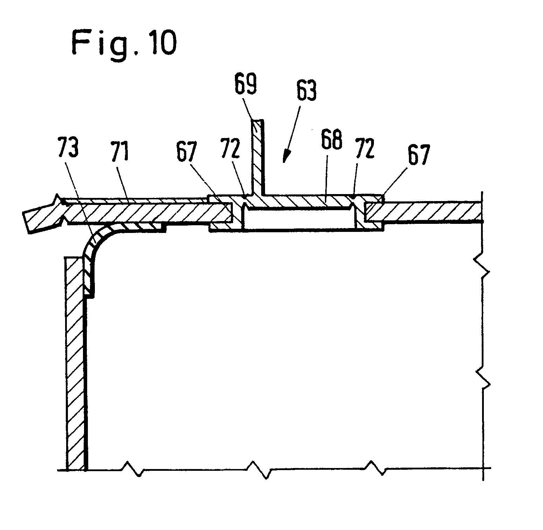

Auch in Figur 10 ist als Schnittdarstellung entlang der Linie X-X in Figur 9 diese Öffnungsvorrichtung 63 im Schnitt dargestellt. Die Packungswände sind nur abgebrochen angedeutet.

Setzt man die oben beschriebene Vorrichtung zur Herstellung einer Flüssigkeitspackung unter Anspritzen einer Endwand 6 ein, dann erhält man eine Packung 13 gemäß Darstellung der Figur 8. Hier ist der Tubus mit der Siegelnaht 66 unten viereckig und oben rund dargestellt, der Boden unten ist nicht mehr bezeichnet, und am Rand des Tubus 107 oben ist der Deckel 6 mit der Öffnungsvorrichtung 63 angespritzt.

Bei der Ausführungsform nach den Figuren 6, 7, 9 und 10 ist bei der Herstellung gemäß Figur 7 der Spritzkanal 71 veranschaulicht, der für den Fluß des heißen Thermoplastmaterials von dem Spritzkopf 5 zur Öffnungsvorrichtung 63 sorgt. Die fadenförmige Wulst dieses Spritzkanals 71 bleibt auf dem Papier 2 haften, nachdem die beiden Formhälften 7 und 8 gemäß Pfeil 14 auseinandergezogen sind. Der Spritzkopf 5 reißt dann diesen Thermoplastfaden ab, und die Formen 7, 8 sind sauber und frei von Plastmaterial.

Außerdem sieht man Schwächungslinien 72, deren eine direkt neben der Greiflasche 69 angeordnet ist und als Aufreißhilfe dient. Längs dieser gegebenenfalls endlos verlaufenden Schwächungslinie 72 kann die Öffnungsvorrichtung 63 bei der Darstellung der Figur 10 geöffnet werden.

In Figur 10 sieht man auch zusätzlich den inneren Abdeckstreifen 73, welcher für die vollständige Dichtigkeit der Flüssigkeitspackung 13' sorgt.

## Patentansprüche

1. Vorrichtung für den Antrieb von Spritzformteilen (7, 8) einer Kunststoffspritzeinrichtung (37) zum Anspritzen eines Wandteiles (6, 63) an eine Papierbahn (2, 107), mit mindestens einer an einem Träger (9) befestigzen Versorgungsspritze (10), mehreren, mit dieser jeweils fest verbundenen Spritzköpfen (5) und mit angetriebenen Verbindungshebeln (17, 17', 18), dadurch gekennzeichnet, daß die Förderrichtung (A ; 30) der Papierbahn (2 ; 107) etwa senkrecht zur Öffnungs- (14) und Schließrichtung (15) der Formteile (7, 8) liegt mindestens zwei Paare (16) von relativ zueinander bewegbaren Formteilen (7, 8) im Abstand (X) in Öffnungs- (14) und Schließrichtung (15) nebeneinander angeordnet sind und die Verbindungshebel (17, 17', 18) in Form von Laschen (18) und Kniehebeln (17, 17') derart angelenkt sind, daß jedes Formteilpaar (16) mittels mindestens zweier Lagerzapfen (19) in einer parallel zur Öffnungs(14) und Schließrichtung (15) der Formteile (7, 8) verlaufenden Schiene (20) geführt ist, jeder zwischen Formteilpaaren (16) angeordnete Lagerzapfen (19) einerseits über zwei paarweise angeordnete Kniehebel (17, 17') drehbar am nächsten Formteil (7', 8') und andererseits an einer einseitig stationär gehalterten Lasche (18) angelenkt ist, die beiden Kniehebel (17, 17') an einer beweglichen Drehstelle (21) miteinander und mit dem bewegbaren Träger (9) verbunden sind und daß der jeweils das äußerste Formteil (7, 8') führende Lagerzapfen (19) einerseits an einer einseitig stationär gehalterten Lasche (18) und andererseits über einen Kniehebel (17') drehbar mit dem beweglichen Träger (9) verbunden ist.

2. Vorrichtung nach Anspruch 1, dadurch gekennzeichnet, daß die Kniehebel (17, 17') jedes Kniehebelpaares benachbarter Formteilpaare (16) im geschlossenen Zustand der Formteile (7, 8) in einem Winkel ($\alpha$) von 0° bis 15°, vorzugsweise von 0° bis 5°, zueinander stehen, d.h. etwa in einer Linie hintereinander stehen.

3. Vorrichtung nach Anspruch 1 oder 2, dadurch gekennzeichnet, daß die Schiene (20) senkrecht zu ihrer Längsachse von den in ihr geführten Lagerzapfen (19) bewegbar ist.

4. Vorrichtung nach einem der Ansprüche 1 bis 3, dadurch gekennzeichnet, daß der Träger (9) die Gestalt eines Kammes mit Endarmen (23) und mittleren Armen (22) hat, an deren jeweils freiem Ende sich die bewegliche Drehstelle (21) befindet.

5. Vorrichtung nach einem der Ansprüche 1 bis 4, dadurch gekennzeichnet, daß jedes Paar (16) von Formteilen (7, 8) ein Formoberteil bildet und relativ zu diesem bewegbare Formunterteile (4) durch intermittierend drehbar angetriebene, auf einem Rad (36) befestigte Dorne (4) gebildet sind, daß die Achse (70) des Dornrades (36) etwa in Öffnungs- (14) und Schließrichtung (15) des Formoberteiles (7, 8) angeordnet ist und daß mindestens zwei Dornräder (36) mit gemeinsamer Drehachse (70) in dem Abstand (X) nebeneinander angeordnet sind.

6. Verwendung der Vorrichtung nach einem der Ansprüche 1 bis 5 zur Herstellung von Flüssigkeitspackungen unter Anspritzen einer Endwand (6) aus Kunststoff an den Papiertubus (107) der Packung (13), wobei deren Seitenwände durch den Tubus (107) gebildet sind und aus beidseitig mit Kunststoff beschichtetem Papier bestehen (Figur 8).

7. Verwendung der Vorrichtung nach einem der Ansprüche 1 bis 4 zur Herstellung von Flüssigkeitspackungen (13') unter Einspritzen einer Öffnungsvorrichtung (63') aus Kunststoff in eine Seiten- oder Endwand (6) der Packung (13'), die aus beidseitig mit Kunstsoff beschichtetem Papier besteht, wobei die Seiten (107) und/oder Endwände (6) über Faltkanten (64, 65) und/oder Schweißnähte (66) miteinander verbunden sind (Figuren 6, 7, 9, 10).

## Claims

1. Arrangement for the drive of injection mould portions (7, 8) of a plastics injection moulding apparatus (37) for injection-moulding of a wall portion (6, 63) on to a paper web (2, 107), comprising at least one feed injector (10) secured to a carrier (9), a plurality of injection heads (5) which are each fixedly connected to the feed injector, and driven connecting levers (17, 17', 18), characterised in that the conveyor direction (A ; 30) of the paper web (2 ; 107) is approximately perpendicular to the opening (14) and closing directions (15) of the mould portions (7, 8), at least two pairs (16) of mould portions (7, 8) which are movable relative to each other are arranged in side-by-side relationship at the spacing (X) in the opening (14) and closing directions (15) and the connecting levers (17, 17', 18) are pivotally connected in the form of bars (18) and crank levers (17, 17') in such a way that each pair (16) of mould portions is guided by means of at least two mounting trunnions (19) in a rail (20) extending parallel to the opening (14) and closing directions (15) of the mould portions (7, 8), each mounting trunnion (19) which is arranged between pairs (16) of mould portions is connected on the one hand rotatably to the next mould portion (7', 8') by way of two crank levers (17, 17') arranged in pairs and on the other hand to a bar (18) rich is mounted in a stationary condition at one end, the two crank levers (17, 17') are connected at a movable rotational location (21) to each other and to the movable carrier (9) and that the mounting trunnion (19) which respectively guides the outermost mould portion (7, 8') is connected on the one hand at a bar (18) which is mounted in a stationary condition at one end and on the other hand rotatably to the movable carrier (9) by way of a crank lever (17').

2. An arrangement according to claim 1 characterised in that the crank levers (17, 17') of each pair of crank levers of adjacent pairs (16) of mould portions, in the closed condition of the mould portions (7, 8), are disposed relative to each other at an angle (α) of from 0° to 15°, preferably from 0° to 5°, that is to say, they are disposed substantailly in a line one behind the other.

3. An arrangement according to claim 1 or claim 2 characterised in that the rail (20) is movable perpendicularly to its longitudinal axis by the mounting trunnions (19) guided therein..

4. An arrangement according to one of claims 1 to 3 characterised in that the carrier (9) is in the form of a comb with end arms (23) and central arms (22), at the free ends of each of which are disposed the respective movable rotational locations (21).

5. An arrangement according to one of claim 1 to 4 characterised in that each pair (16) of mould portions (7, 8) forms an upper mould portion and lower mould portions (4) which are movable relative to the upper mould portion are formed by intermittently rotatably driven mandrels (4) which are fixed on a wheel (36), that the axis (70) of the mandrel-bearing wheel (36) is arranged approximately in the opening (14) and closing directions (15) of the upper mould portion (7, 8), and that at least two mandrel-bearing wheels (36) are arranged in side-by-side relationship with a common axis of rotation (70) at the spacing (X).

6. Use of the arrangement according to one of claims 1 to 5 for producing liquid packs with an end wall (6) of plastics material being injection-moulded on to the paper tube (107) of the pack (13), wherein the side walls thereof are formed by the tube (107) and comprise paper coated on both sides with plastics material (Figure 8).

7. Use of the arrangement according to one of claims 1 to 4 for producing liquid packs (13') with injection-moulding of an opening means (63') of plastics material into a side or end wall (6) of the pack (13') which comprises paper coated on both sides with plastics material, wherein the sides (107) and/or end walls (6) are connected together by way of fold edges (64, 65) and/or welded seams (66) (Figures 6, 7, 9 and 10).

## Revendications

1. Dispositif pour l'entraînement de pièces de forme d'injection (7, 8) d'un dispositif d'injection de matière plastique (37) pour injecter une partie de paroi (6, 63) sur une bande de papier (2, 107) avec au moins une buse d'alimentation (10) fixée à un support (9), plusieurs têtes d'injection (5) chacune reliée à celle-ci et comportant des leviers de liaison d'entraînement (17, 17', 18) caractérisé en ce que le sens d'avancement (A ; 30) de la bande de papier (2, 107) se trouve sensiblement perpendiculaire à la direction d'ouverture (14) et de fermeture (15) des pièces de forme, au moins deux paires (16) de forme (7, 8) mobiles l'une par rapport à l'autre sont disposées les unes au voisinage des autres à une distance (X) dans le sens d'ouverture (14) et de fermeture (15) et les leviers de liaison (17, 17', 18) sont articulés sous la forme de pattes (18) et de leviers coudés (17, 17') de telle sorte que chaque paire de pièces de forme (16) est guidée au moyen d'au moins deux tourillons (19) dans un rail (20) qui s'étend parallèlement à la direction d'ouverture (14) et de fermeture (15) des pièces de forme (7, 8), chaque tourillon (19) disposé entre des paires de pièces de forme (16) est articulé d'une part sur deux leviers coudés (17, 17') associés par paire tournant sur la pièce de forme suivante (7', 8') et d'autre part sur une patte (18) maintenue stationnaire à une de ses extrémités, les deux leviers coudés (17, 17') sont reliés entre eux sur un point de rotation mobile (21) et au support mobile (9) et en ce que le tourillon (19) qui guide la pièce de forme (7, 8') extérieure d'une part est relié à une patte (18) maintenue stationnaire à une extrémité et d'autre part est relié par un levier coudé (17') pivotant au support mobile (9).

2. Dispositif selon la revendication 1 caractérisé en ce que les leviers coudés (17, 17') de chaque paire de leviers coudés de paires voisines de pièces de forme (16) se trouvent l'un par rapport à l'autre en formation serrée sur les pièces de forme (7, 8) avec un angle ($\alpha$) de 0° à 15°, de préférence de 0° à 5°, c'est-à-dire qu'ils se trouvent pratiquement en alignement.

3. Dispositif selon la revendication 1 ou la revendication 2 caractérisé en ce que le rail (20) est mobile perpendiculairement par rapport à son axe longitudinal selon lequel sont guidés les tourillons (19).

4. Dispositif selon l'une des revendications 1 à 3 caractérisé en ce que le support (9) se présente sous la forme d'un peigne avec des bras d'extrémité (23) et des bras centraux (22) aux extrémités libres de chacun desquels se trouve l'emplacement mobile de pivotement (21).

5. Dispositif selon l'une des revendications 1 à 4 caractérisé en ce que chaque paire (16) de pièces de forme (7, 8) constitue une partie supérieure et, par rapport à celle-ci, des pièces de forme inférieures (4) mobiles sont entraînées en rotation intermittente et sont réalisées sous la forme de mandrins (4) fixés sur une roue (36), en ce que l'axe (70) de la roue à mandrins (36) est disposé sensiblement dans la direction d'ouverture (14) et de fermeture (15) de la partie supérieure de forme (7, 8) et en ce que, au moins deux roues à mandrins (36) avec un axe commun de rotation (70) sont disposées au voisinage l'une de l'autre avec entre elles la distance (X).

6. Utilisation du dispositif selon l'une des revendications 1 à 5 pour la fabrication d'emballages pour liquide pour injection d'une paroi d'extrémité (6) en matière plastique sur le tube de papier (107) de l'emballage (13), les parois latérales de celui-ci étant constituées à partir du tube (107) et consistant en du papier revêtu de matière plastique sur ses deux faces (figure 8).

7. Utilisation du dispositif selon l'une des revendications 1 à 4 pour la fabrication d'emballages pour liquide (13') par injection d'un dispositif d'ouverture (63') en matière plastique dans une paroi latérale ou d'extrémité (6) de l'emballage (13') laquelle consiste en du papier revêtu de matière plastique sur ses deux faces, les parois latérales (107) et/ou d'extrémité (6) étant reliées entre elles au moyen de bords rabattus (64/65) et/ou de cordons de soudure (66), (Figures 6, 7, 9, 10).

Fig.1

EP 0 235 667 B1

# Fig.2

Fig.3

Fig. 4

Fig.5

# Fig. 6

EP 0 235 667 B1

# Fig.7

# Fig.8

# Fig.9

## Fig. 10